# EUROPÄISCHE PATENTANMELDUNG

(11) **EP 1 375 388 A2**
(43) Veröffentlichungstag der Anmeldung: **02.01.2004**
(21) Anmeldenummer: 03013879.6
(22) Anmeldetag: 19.06.2003
(51) Int. Cl.: B65G 1/02

(54) **Regal zum Ablegen von Stapeln aus blattförmigen Materialien während und/oder nach deren Bearbeitung**

(30) Priorität: 24.06.2002 DE 10228165
(71) Anmelder: Baumann Maschinenbau Solms GmbH & Co. KG, 35606 Solms (DE)
(72) Erfinder: Schmitt, Berthold, 35638 Leun (DE); Assmann, Volkmar, 35768 Siegbach (DE)
(74) Vertreter: Schmidt, Ursula, Dipl.-Ing. (FH)

(57) **Zusammenfassung**

Die erfindungsgemäße Aufgabe, die darin besteht, ein Regal (5) zu schaffen, das ein sortiertes Ablegen von insbesondere papierstapeln (10) unterschiedlichen Formats oder Druckinhaltes und das automatische und sortierte Abladen der Papierstapel (10) auf konstruktiv einfache Art und Weise ermöglicht, wird dadurch gelöst, dass das Gestell (6) wenigstens vier Aufnahmeböden (1 bis 4) in mindestens zwei übereinander angeordneten Ebenen (7,8) aufweist, wobei jeweils der Aufnahmeboden (1,2) einer Ebene (7), der diagonal zu einem Aufnahmeboden (3,4) einer anderen Ebene (8) angeordnet ist, mit diesem in Wirkverbindung steht und dass die diagonal zueinander angeordneten Böden (1,3 und 2,4) beider Ebenen (7,8) jeweils einen Antrieb aufweisen.

## Beschreibung

Die Erfindung betrifft ein Regal zum Ablegen von Stapeln aus blattförmigen Materialien während und/oder nach deren Bearbeitung, insbesondere zum sortierten Zwischenlagern von unterschiedlich bedruckten und/oder unterschiedliche Formate aufweisenden Papierstapeln während und/oder nach deren Bearbeitung in einer Schneidanlage, im wesentlichen bestehend aus einem Gestell, in dem verfahrbare Aufnahmeböden angeordnet sind.

Stapelregale oder Luftbrettsysteme sind in unterschiedlichen Ausführungen bereits bekannt. Sie dienen beispielsweise dem Zwischenlagern von Papierstapeln vor, während oder nach deren Bearbeitung in einer Schneidanlage.

DE 1 244 711 und EP 0 242 763 beschreiben derartige Systeme, wobei die Lagerungsvorgänge von Hand oder auch teilweise automatisiert erfolgen.

DE 101 62 367.4 offenbart eine weitere Vorrichtung zum Lagern von Schneidgut, mit der raumsparend eine relativ große Anzahl an Lagerplätzen geschaffen werden und die Transportvorgänge automatisiert sind. Dabei ist die Vorrichtung als Hochregal mit übereinander angeordneten Aufnahmebereichen ausgebildet und zwischen Hochregal und Schneidanlage sind Transportvorrichtungen zum Transportieren des Schneidgutes zum oder aus dem Hochregal angeordnet. Die Aufnahmebereiche sind als Förderbänder ausgeführt. Die jeweilige Ablagefläche ist variabel an die Arbeits- und Transportflächenhöhe anpassbar, so dass auch ein sortiertes Ablegen von Schneidgut unterschiedlichen Formats oder Druckinhaltes möglich ist.

Nachteilig ist, dass der Abladevorgang der sortierten Stapel auf Paletten nach Beendigung der Schneidvorgänge entweder zumindest teilweise manuell erfolgen muss oder aber bei automatischer Arbeitsweise eines hohen konstruktiven und technischen Aufwandes bedarf.

Es ist Aufgabe der Erfindung, ein Regal zu schaffen, das ein sortiertes Ablegen von insbesondere Papierstapeln unterschiedlichen Formats oder Druckinhaltes und das automatische und sortierte Abladen der Papierstapel auf konstruktiv einfache Art und Weise ermöglicht.

Erfindungsgemäß wird die Aufgabe durch ein Regal gemäß des Oberbegriffes von Patentanspruch 1 dadurch gelöst, dass das Gestell wenigstens vier Aufnahmeböden in mindestens zwei übereinander angeordneten Ebenen aufweist, wobei jeweils der Aufnahmeboden einer Ebene, der diagonal zu einem Aufnahmeboden einer anderen Ebene angeordnet ist, mit diesem in Wirkverbindung steht und dass die diagonal zueinander angeordneten Böden beider Ebenen jeweils einen Antrieb aufweisen.

Das erfindungsgemäße Regal gestattet das automatische und sortierte Abladen von aus Sammelbögen mit unterschiedlich bedruckten Inhalten hergestellten Nutzen. Bis zu vier unterschiedliche Aufträge können gleichzeitig gesammelt und abgestapelt werden.

Durch die vollautomatische Abstapelung wird eine hohe Produktivität im Bereich Schneiden erzielt. Die manuelle Abstapelung kann gänzlich entfallen.

Die einzelnen Nutzen werden als Auftrag gesammelt und vollautomatisch abgestapelt, wenn das Lagenbild komplett ist.

Die körperliche Beanspruchung des Bedienpersonals wird deutlich reduziert, der Bediener kann sich auf die Schneidaufgaben konzentrieren und muss sich nicht mit dem Abstapeln beschäftigen.

Nach einer vorzugsweisen und konstruktiv einfachen Ausbildung des erfindungsgemäßen Regals sind die Aufnahmeböden umlaufend geführt im Gestell angeordnet.

Aus konstruktiver Sicht von Vorteil ist des weiteren, wenn die jeweils diagonal zueinander angeordneten Aufnahmeböden mittels kettenartiger Elemente miteinander verbunden sind.

Zum besseren Handling und zur kostengünstigen Durchführung des Abladeprozesses ist des weiteren vorgesehen, dass das Regal zwischen der Bearbeitungsstation des Papierstapels und der Abladereinheit angeordnet ist.

Dabei sollte das Regal auf vorteilhafte Weise so zwischen Bearbeitungsstation und Abladereinheit angeordnet sein, dass Greifelemente der Abladereinheit automatisch die Papierstapel klemmen, auf den Abladertisch der Abladereinheit transportieren und sortiert auf Abstapelpaletten abladen.

Zur Unterstützung der Transport- und Positioniervorgänge der Papierstapel ist vorgesehen, dass die Aufnahmeböden mit Luft beaufschlagbar ausgebildet sind.

Die Erfindung wird nachfolgend anhand eines Ausführungsbeispieles, dem Abladen von Papierstapeln nach dem Beschneiden in einer Schneidanlage, näher erläutert. Die zugehörige Zeichnung zeigt dabei in
- Fig. 1: eine prinzipielle Darstellung der Schneidanlage mit Regal und Abladereinheit,
- Fig. 2: eine prinzipielle Darstellung des erfindungsgemäßen Regals und
- Fig. 3: die schematische Darstellung des Bewegungsablaufes der Aufnahmeböden des Regals.

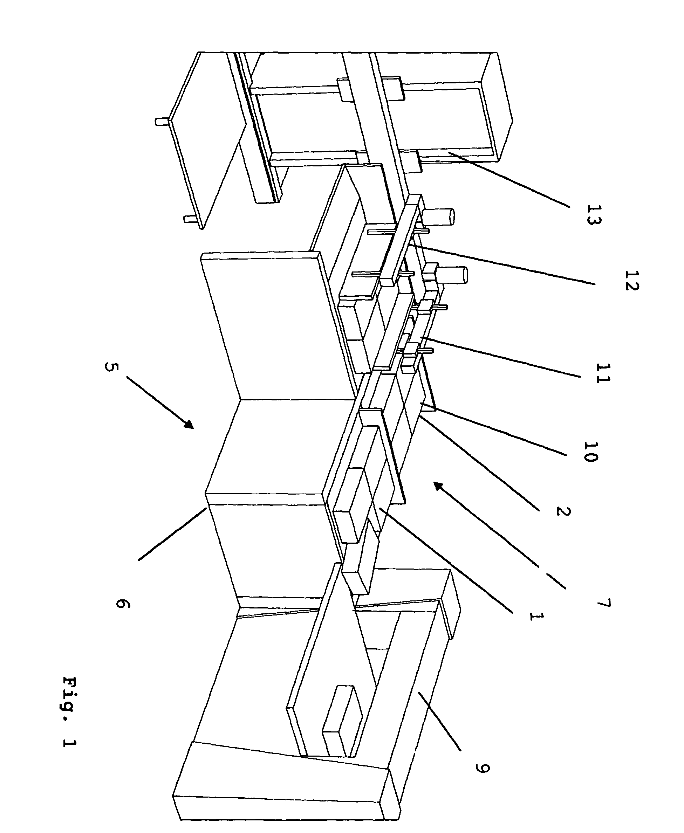

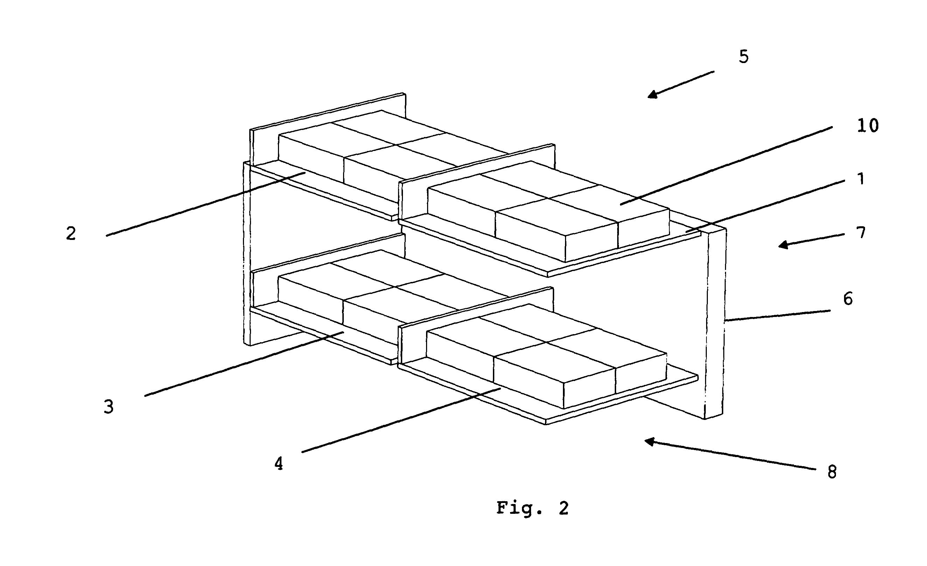

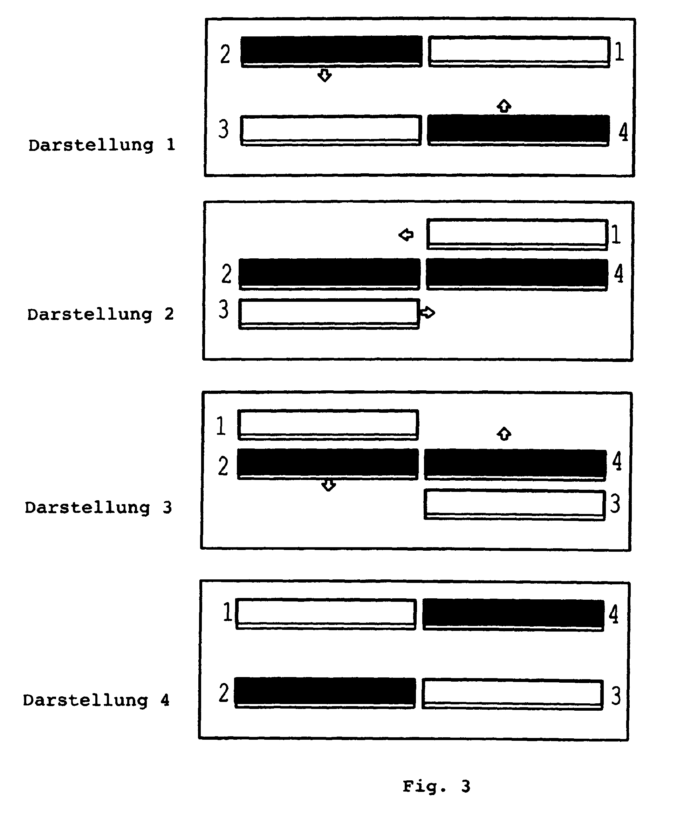

Nach den Fig. 2 und 3 besteht das Regal 5 aus dem Gestell 6, in dem vier als Luftbretter ausgebildete Aufnahmeböden 1 bis 4 in zwei abstandsweise übereinander angeordneten Ebenen 7, 8 angeordnet sind. Die Aufnahmeböden 1 und 3 sind über eine - in der Zeichnung nicht dargestellte - Kette verbunden und werden mittels Motor verfahren. Die Aufnahmeböden 2 und 4 sind ebenfalls über eine Kette verbunden und werden mittels eines weiteren Motors verfahren. Wenn also der Aufnahmeboden 1 verfahren wird, fährt Aufnahmeboden 3 automatisch mit. Die Aufnahmeböden 1 bis 4 sind umlaufend geführt. Die Aufnahmeböden 1 bis 4 wechseln stets zwischen beiden Ebenen 7, 8 und können beliebig oft angefahren werden, bis die Abstapelung erfolgt. Auf der Bedienerseite der Schneidemaschine 9 - siehe Fig. 1 - werden die Papierstapel oder Nutzen 10 sortiert aufgelegt beziehungsweise gesammelt und an der Abstaplerseite von den Greifelementen 11, 12 der Abladereinheit 13 übernommen und vollautomatisch abgestapelt. Die Nutzen 10 des ersten Auftrages werden nach dem Beschneiden in der Schneidemaschine 9 auf den bereitstehenden Aufnahmeboden 1 des Regals 5 abgelegt, dieser befindet sich direkt neben dem Bediener der Schneidemaschine 9. Für den zweiten Auftrag wird der nächste Aufnahmeboden 4 in gleicher Position bereitgestellt, dies lässt sich bis zum vierten Aufnahmeboden 2 wiederholen.

Die Wechselzeit der einzelnen Aufnahmeböden ist äußerst kurz, ca. 4 bis 5 Sekunden. Während geschnitten wird, werden im Hintergrund die Aufnahmeböden 1 bis 4 getaktet, damit der nächste Auftrag übernommen werden kann. Sobald der entsprechende Auftrag auf dem Aufnahmeboden 1 bis 4 komplettiert ist, wird Papierstapel 10 von der Abladereinheit 13 übernommen und vollautomatisch auf den dafür vorgesehenen Palettenplatz abgestapelt. Die Abladereinheit 13 ist horizontal verfahrbar ausgebildet und fährt automatisch den entsprechenden Palettenplatz an.

Fig. 3 veranschaulicht die Funktionsweise des Regals 5 wie folgt:

Gemäß der ersten Darstellung steht der Aufnahmeboden 1 in Beschickungsposition und Aufnahmeboden 2 befindet sich in Abladeposition. Aufnahmeboden 2 wird nach unten in eine Mittelstellung verfahren, automatisch fährt Aufnahmeboden 4 in Mittelstellung (zweite Darstellung). Der Aufnahmeboden 1 fährt nach links, automatisch fährt Aufnahmeboden 3 nach rechts. Der Aufnahmeboden 2 fährt weiter nach unten, dadurch fährt Aufnahmeboden 4 nach oben in Ausgangsstellung (dritte Darstellung). Der Aufnahmeboden 4 ist nun in Beschickungsposition, während sich Aufnahmeboden 1 in Abladeposition befindet.

### Bezugszeichenliste

- 1: Aufnahmeboden
- 2: Aufnahmeboden
- 3: Aufnahmeboden
- 4: Aufnahmeboden
- 5: Regal
- 6: Gestell
- 7: Ebene
- 8: Ebene
- 9: Schneidemaschine
- 10: Papierstapel, Nutzen, Lage
- 11: Greifelement
- 12: Greifelement
- 13: Abladereinheit

## Patentansprüche

1. Regal zum Ablegen von Stapeln aus blattförmigen Materialien während und/oder nach deren Bearbeitung, insbesondere zum sortierten Zwischenlagern von unterschiedlich bedruckten und/oder unterschiedliche Formate aufweisenden Papierstapeln während und/oder nach deren Bearbeitung in einer Schneidanlage, im wesentlichen bestehend aus einem Gestell, in dem verfahrbare Aufnahmeböden angeordnet sind, **dadurch gekennzeichnet, dass** das Gestell (6) wenigstens vier Aufnahmeböden (1 bis 4) in mindestens zwei übereinander angeordneten Ebenen (7, 8) aufweist, wobei jeweils der Aufnahmeboden (1, 2) einer Ebene (7), der diagonal zu einem Aufnahmeboden (3, 4) einer anderen Ebene (8) angeordnet ist, mit diesem in Wirkverbindung steht und dass die diagonal zueinander angeordneten Böden (1, 3 und 2, 4) beider Ebenen (7, 8) jeweils einen Antrieb aufweisen.

2. Regal nach Anspruch 1, **dadurch gekennzeichnet, dass** die Aufnahmeböden (1 bis 4) umlaufend geführt im Gestell (6) angeordnet sind.

3. Regal nach Anspruch 1 und 2, **dadurch gekennzeichnet, dass** die jeweils diagonal zueinander angeordneten Aufnahmeböden (1, 3 und 2, 4) mittels kettenartiger Elemente miteinander verbunden sind.

4. Regal nach Anspruch 1 bis 3, **dadurch gekennzeichnet, dass** es zwischen einer Bearbeitungsstation (9) des Papierstapels (10) und einer Abladereinheit (13) angeordnet ist.

5. Regal nach Anspruch 4, **dadurch gekennzeichnet, dass** es so zwischen Bearbeitungsstation (9) und Abladereinheit (13) angeordnet ist, dass Greifelemente (11, 12) der Abladereinheit (13) automatisch die Papierstapel (10) klemmen, auf den Abladertisch der Abladereinheit (13) transportieren und sortiert auf Abstapelpaletten abladen.

6. Regal nach Anspruch 1 bis 5, **dadurch gekennzeichnet, dass** die Aufnahmeböden (1 bis 4) mit Luft beaufschlagbar ausgebildet sind.
